(19) Europäisches Patentamt
European Patent Office
Office européen des brevets

(11) **EP 4 414 944 A1**

(12) **EUROPEAN PATENT APPLICATION**

(43) Date of publication:
**14.08.2024 Bulletin 2024/33**

(21) Application number: **24156253.7**

(22) Date of filing: **07.02.2024**

(51) International Patent Classification (IPC):
**G06V 10/25** (2022.01)   **G06V 10/70** (2022.01)
**G06V 10/82** (2022.01)   **G06V 10/80** (2022.01)
**G06V 20/60** (2022.01)   **G06V 40/10** (2022.01)

(52) Cooperative Patent Classification (CPC):
**G06V 10/25; G06V 10/768; G06V 10/80;
G06V 10/82; G06V 20/60; G06V 40/10**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.02.2023 US 202363483837 P
08.01.2024 US 202418407191**

(71) Applicant: **Synaptics Incorporated
San Jose, CA 95131 (US)**

(72) Inventors:
• **SCHEFFER, Zacchaeus
San Jose, 95131 (US)**
• **WORFOLK, Patrick
San Jose, 95131 (US)**
• **SHANMUGA VADIVEL, Karthikeyan
San Jose, 95131 (US)**
• **OREIFEJ, Omar
San Jose, 95131 (US)**

(74) Representative: **J A Kemp LLP
80 Turnmill Street
London EC1M 5QU (GB)**

(54) **NETWORK-AGNOSTIC REGION OF INTEREST (ROI) INFERENCING**

(57) This disclosure provides methods, devices, and systems for object detection. The present implementations more specifically relate to region of interest (ROI) inferencing techniques that can be implemented using a single object detection model. In some aspects, a computer vision system maps a set of grid cells to an input image so that each grid cell includes a respective portion of the image, and where each of the grid cells is assigned a respective priority value. The system selects an ROI of the image based on the priority value assigned to each grid cell and performs, on the ROI, an inferencing operation associated with an object detection model. The system updates the priority values for one or more of the grid cells based on a result of the inferencing operation. The system then selects another ROI based on the updated priority values and perform the inferencing operation on the new ROI.

FIG. 2

EP 4 414 944 A1

**Description**

CROSS-REFERENCE TO RELATED APPLICATION

This application claims priority and benefit under 35 USC § 119(e) to U.S. Provisional Patent Application No. 63/483,837, filed on February 8, 2023, which is incorporated herein by reference in its entirety.

TECHNICAL FIELD

The present implementations relate generally to object detection, and specifically to network-agnostic region of interest (ROI) inferencing techniques.

BACKGROUND OF RELATED ART

Computer vision is a field of artificial intelligence (AI) that mimics the human visual system to draw inferences about an environment from images or video of the environment. Example computer vision technologies include object detection, object classification, and object tracking, among other examples. Object detection encompasses various techniques for detecting objects in the environment that belong to a known class (such as humans, cars, or text). For example, the presence and location of an object can be detected or inferred by scanning an image for a set of features (such as eyes, nose, and lips) that are unique to objects of a particular class (such as humans). Some object detection techniques rely on statistical models for feature extraction whereas other object detection techniques rely on neural network models for feature extraction. Such models can be used for localizing objects in images and may be generally referred to as "object detection models."

The memory and processing resources required for object detection generally grows proportionally with the number of image pixels provided as input to the object detection model. Thus, existing object detection techniques may require intensive processing power to achieve accurate detection results, particularly for high resolution images. Because computer vision is often implemented by low power image capture or video applications (such as battery-powered cameras), there is a need to reduce the resource consumption of computer vision applications without sacrificing object detection accuracy.

SUMMARY

This Summary is provided to introduce in a simplified form a selection of concepts that are further described below in the Detailed Description. This Summary is not intended to identify key features or essential features of the claimed subject matter, nor is it intended to limit the scope of the claimed subject matter.

One innovative aspect of the subject matter of this disclosure can be implemented in a method of inferencing performed by a computer vision system. The method includes steps of receiving an input image; mapping a plurality of grid cells to the input image so that each grid cell of the plurality of grid cells includes a respective portion of the input image; performing an inferencing operation on the portion of the input image included in a first grid cell of the plurality of grid cells, where the inferencing operation is associated with an object detection model; and performing the inferencing operation on a second grid cell of the plurality of grid cells based at least in part on a result of the inferencing operation performed on the portion of the input image included in the first grid cell.

Another innovative aspect of the subject matter of this disclosure can be implemented in a computer vision system including a processing system and a memory. The memory stores instructions that, when executed by the processing system, causes the computer vision system to receive an input image; map a plurality of grid cells to the input image so that each grid cell of the plurality of grid cells includes a respective portion of the input image; perform an inferencing operation on the portion of the input image included in a first grid cell of the plurality of grid cells, where the inferencing operation is associated with an object detection model; and perform the inferencing operation on a second grid cell of the plurality of grid cells based at least in part on a result of the inferencing operation performed on the portion of the input image included in the first grid cell.

BRIEF DESCRIPTION OF THE DRAWINGS

The present embodiments are illustrated by way of example and are not intended to be limited by the figures of the accompanying drawings.

FIG. 1 shows a block diagram of an example computer vision system, according to some implementations.
FIG. 2 shows a block diagram of an example image processor, according to some implementations.

# EP 4 414 944 A1

FIG. 3 shows an example mapping of grid cells to an input image, according to some implementations.

FIGS. 4A and 4B show illustrative flowcharts depicting an example inferencing operation, according to some implementations.

FIGS. 5A and 5B show illustrative flowcharts depicting another example inferencing operation, according to some implementations.

FIG. 6 shows example detections resulting from an inferencing operation performed on an input image, according to some implementations.

FIG. 7 shows a block diagram of an example inference post-processor, according to some implementations.

FIGS. 8A-8D show an example of a post-processing operation performed on a set of detections coinciding with a grid cell.

FIG. 9 shows example detections resulting from inferencing operations performed on a series of input images.

FIG. 10 shows example inferences resulting from inferencing operations performed on a series of input images.

FIG. 11 shows another block diagram of an example inference post-processor, according to some implementations.

FIG. 12 shows example detections resulting from inferencing operations performed on a series of input images, according to some implementations.

FIG. 13 shows example detections resulting from inferencing operations performed on a series of input images, according to some implementations.

FIG. 14 shows a block diagram of an example computer vision system, according to some implementations.

FIG. 15 shows an illustrative flowchart depicting an example inferencing operation, according to some implementations.

DETAILED DESCRIPTION

In the following description, numerous specific details are set forth such as examples of specific components, circuits, and processes to provide a thorough understanding of the present disclosure. The term "coupled" as used herein means connected directly to or connected through one or more intervening components or circuits. The terms "electronic system" and "electronic device" may be used interchangeably to refer to any system capable of electronically processing information. Also, in the following description and for purposes of explanation, specific nomenclature is set forth to provide a thorough understanding of the aspects of the disclosure. However, it will be apparent to one skilled in the art that these specific details may not be required to practice the example embodiments. In other instances, well-known circuits and devices are shown in block diagram form to avoid obscuring the present disclosure. Some portions of the detailed descriptions which follow are presented in terms of procedures, logic blocks, processing and other symbolic representations of operations on data bits within a computer memory.

These descriptions and representations are the means used by those skilled in the data processing arts to most effectively convey the substance of their work to others skilled in the art. In the present disclosure, a procedure, logic block, process, or the like, is conceived to be a self-consistent sequence of steps or instructions leading to a desired result. The steps are those requiring physical manipulations of physical quantities. Usually, although not necessarily, these quantities take the form of electrical or magnetic signals capable of being stored, transferred, combined, compared, and otherwise manipulated in a computer system. It should be borne in mind, however, that all of these and similar terms are to be associated with the appropriate physical quantities and are merely convenient labels applied to these quantities.

Unless specifically stated otherwise as apparent from the following discussions, it is appreciated that throughout the present application, discussions utilizing the terms such as "accessing," "receiving," "sending," "using," "selecting," "determining," "normalizing," "multiplying," "averaging," "monitoring," "comparing," "applying," "updating," "measuring," "deriving" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

In the figures, a single block may be described as performing a function or functions; however, in actual practice, the function or functions performed by that block may be performed in a single component or across multiple components, and/or may be performed using hardware, using software, or using a combination of hardware and software. To clearly illustrate this interchangeability of hardware and software, various illustrative components, blocks, modules, circuits, and steps have been described below generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. Also, the example input devices may include components other than those shown, including well-known components such as a processor, memory and the like.

The techniques described herein may be implemented in hardware, software, firmware, or any combination thereof, unless specifically described as being implemented in a specific manner. Any features described as modules or components may also be implemented together in an integrated logic device or separately as discrete but interoperable logic devices. If implemented in software, the techniques may be realized at least in part by a non-transitory processor-readable storage medium including instructions that, when executed, performs one or more of the methods described above. The non-transitory processor-readable data storage medium may form part of a computer program product, which may include packaging materials.

The non-transitory processor-readable storage medium may comprise random access memory (RAM) such as synchronous dynamic random-access memory (SDRAM), read only memory (ROM), non-volatile random-access memory (NVRAM), electrically erasable programmable read-only memory (EEPROM), FLASH memory, other known storage media, and the like. The techniques additionally, or alternatively, may be realized at least in part by a processor-readable communication medium that carries or communicates code in the form of instructions or data structures and that can be accessed, read, and/or executed by a computer or other processor.

The various illustrative logical blocks, modules, circuits and instructions described in connection with the embodiments disclosed herein may be executed by one or more processors (or a processing system). The term "processor," as used herein may refer to any general-purpose processor, special-purpose processor, conventional processor, controller, microcontroller, and/or state machine capable of executing scripts or instructions of one or more software programs stored in memory.

As described above, computer vision is a field of artificial intelligence (AI) that mimics the human visual system to draw inferences about an environment from images or video of the environment. Object detection encompasses various techniques for detecting objects in the environment that belong to a known class. For example, the presence and location of an object can be detected or inferred by scanning an image for a set of features (such as eyes, nose, and lips) that are unique to objects of a particular class (such as humans). Some object detection techniques rely on statistical models for feature extraction whereas other object detection techniques rely on neural network models for feature extraction. Such models can be used for localizing objects in images and may be generally referred to as "object detection models."

The memory and processing resources required for object detection grows proportionally with the number of image pixels provided as inputs to the object detection model. However, computer vision is often implemented by low power edge devices (such as battery-powered cameras) with very limited memory and processing resources. Aspects of the present disclosure recognize that, by focusing on a relatively small region of interest (ROI) within a high resolution image, a less resource intensive object detection model can be used to detect objects within the ROI without sacrificing accuracy, and the output of the object detection model can be further used to guide ROI selection.

Various aspects relate generally to object detection, and more particularly, to ROI inferencing techniques that can be implemented using a single object detection model. In some aspects, a computer vision system may map a set of grid cells to an input image so that each grid cell includes or coincides with a respective portion of the input image, and where each of the grid cells is assigned a respective priority value. The computer vision system selects a portion of the input image (also referred to as the "ROI") based on the priority value assigned to each grid cell and performs, on the selected ROI, an inferencing operation associated with an object detection model. In some implementations, the ROI may coincide with the grid cell assigned the highest priority value at any given time. In some other implementations, the ROI may coincide with any grid cell assigned a priority value that exceeds a threshold priority value.

The computer vision system updates the priority values for one or more of the grid cells based on a result of the inferencing operation. For example, if the inferencing operation does not detect any objects of interest in the selected ROI, the computer vision system may reset the priority value for the coinciding grid cell to a minimum priority value. On the other hand, if the inferencing operation detects one or more objects of interest in the selected ROI, the computer vision system may adjust the priority value for the coinciding grid cell to be higher than the minimum priority value. In some implementations, the adjusted priority value may depend on a confidence level associated with the inferencing result. In some implementations, the computer vision system may select another ROI based on the updated priority values and perform the inferencing operation on the newly selected ROI.

Particular implementations of the subject matter described in this disclosure can be implemented to realize one or more of the following potential advantages. As described above, ROI inferencing techniques can substantially reduce the computational load of computer vision applications. By reusing the same object detection model for ROI selection and inferencing, aspects of the present disclosure may further reduce the memory and processing overhead of computer vision applications without sacrificing inferencing accuracy. For example, a relatively compact object detection model can be used to perform an inferencing operation on any ROI in a high resolution input image. By predicting future ROIs based on the results of the inferencing operation, aspects of the present disclosure may further allow a computer vision system to optimize its camera settings for different ROIs. For example, the computer vision system may increase the exposure time of its camera when the predicted ROI resides in a darker region of an input image.

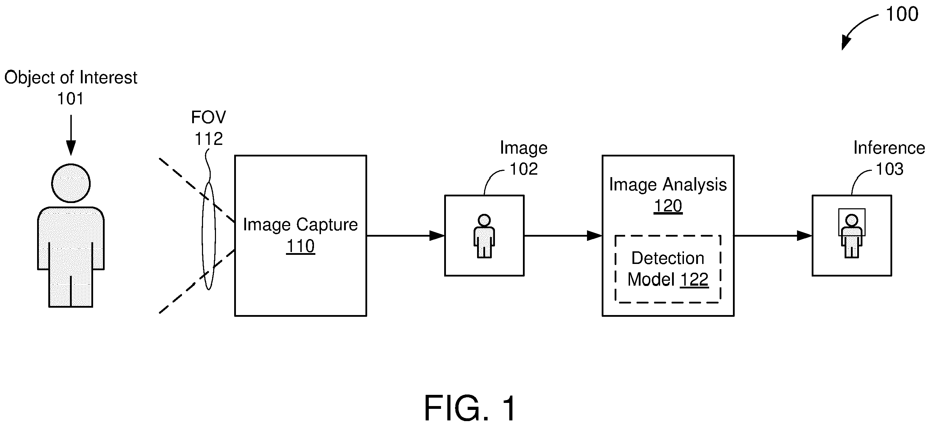

FIG. 1 shows a block diagram of an example computer vision system 100, according to some implementations. In some aspects, the computer vision system 100 may be configured to generate inferences about one or more objects of interest (also referred to as "target objects"). In the example of FIG. 1, an object of interest 101 is depicted as a person. In some other implementations, the computer vision system 100 may be configured to generate inferences about various other objects of interest in addition to, or in lieu of, the object of interest 101.

The system 100 includes an image capture component 110 and an image analysis component 120. The image capture component 110 may be any sensor or device (such as a camera) configured to capture a pattern of light in its field-of-view (FOV) 112 and convert the pattern of light to a digital image 102. For example, the digital image 102 may include an array of pixels (or pixel values) representing the pattern of light in the FOV 112 of the image capture component 110. In some implementations, the image capture component 110 may continuously (or periodically) capture a series of images 102 representing a digital video. As shown in FIG. 1, the object of interest 101 is located within the FOV 112 of the image capture component 110. As a result, the digital images 102 may include the object of interest 101.

The image analysis component 120 is configured to produce one or more inferences 103 based on the digital image 102. In some aspects, the image analysis component 120 may infer whether one or more objects of interest 101 are depicted in the image 102. For example, the image analysis component 120 may detect the person in the digital image 102 and draw a bounding box around the person's face. In other words, the image analysis component 120 may output an annotated image, as the inference 103, indicating the location of the object of interest 101 in relation to the image 102. In some aspects, the location of the object of interest 101 may change over time, for example, based on movements of the object of interest 101 or the image capture component 110. Accordingly, the image analysis component 120 may produce different inferences 103 in response to images 102 captured at different times.

In some aspects, the image analysis component 120 may generate the inference 103 based on an object detection model 122. The object detection model 122 may be trained or otherwise configured to detect objects in images or video. For example, the object detection model 122 may apply one or more transformations to the pixels in the image 102 to create one or more features that can be used for object detection. More specifically, the object detection model 122 may compare the features extracted from the image 102 with a known set of features that uniquely identify a particular class of objects (such as humans) to determine a presence or location of any target objects in the image 102. In some implementations, the object detection model 122 may be a neural network model. In some other implementations, the object detection model 122 may be a statistical model.

As described above, the memory and processing resources required for inferencing grows proportionally with the number of image pixels input to the object detection model 122. However, computer vision applications are often implemented in low power edge devices (such as battery-powered cameras) with limited memory and processing resources. In some aspects, to reduce the computational load of the computer vision system 100, the image analysis component 120 may implement a relatively compact object detection model 122 that is configured to process only a portion of the input image 102 (which may be a high resolution image) at any given time. In other words, the object detection model 122 may not be suitable for processing the input image 102, in its entirety, as a single input. The portion of the image 102 provided as input to the object detection model 122 may be referred to herein as the "region of interest" or "ROI."

In some aspects, the input image 102 may be subdivided into a number of candidate regions that can be selected as the ROI. The image analysis component 120 may select one of the candidate regions as the ROI for inferencing by the object detection model 122 at any given time. The criteria for selecting the ROI may be application-specific. In some implementations, the ROI selection may follow a fixed pattern. For example, the image analysis component 120 may cycle through all of the candidate regions according to a fixed pattern or may cycle through all of the candidate regions according to a fixed pattern, where some candidate regions (of higher interest) are repeated multiple times in the pattern. In some other implementations, the ROI may be randomly selected. For example, the image analysis component 120 may randomly select each candidate region based on a probability assigned to each candidate region or may randomly select each candidate region based on a probability that evolves over time, where the probability may be based on information associated with the candidate region (such as higher interest or prior detection history).

Still further, in some implementations, the ROI may be selected according to a priority associated with each candidate region. For example, the image analysis component 120 may prioritize each candidate region based on a time since the candidate region was last selected as the ROI and an object detection history associated with the candidate region, or may prioritize each candidate region based on a time since the candidate region was last selected as the ROI and an object detection history associated with any of the candidate regions (such as to optimize tracking of objects predicted to move from one candidate region to another). In some aspects, the image analysis component 120 may update the priority values assigned to the candidate regions of the input image 102 based, at least in part, on the inferences produced by the object detection model 122. In other words, the object detection model 122 may be reused to select an ROI in the input image 102 as well as to generate inferences about the selected ROI (such whether an object of interest 101 is detected within the selected ROI).

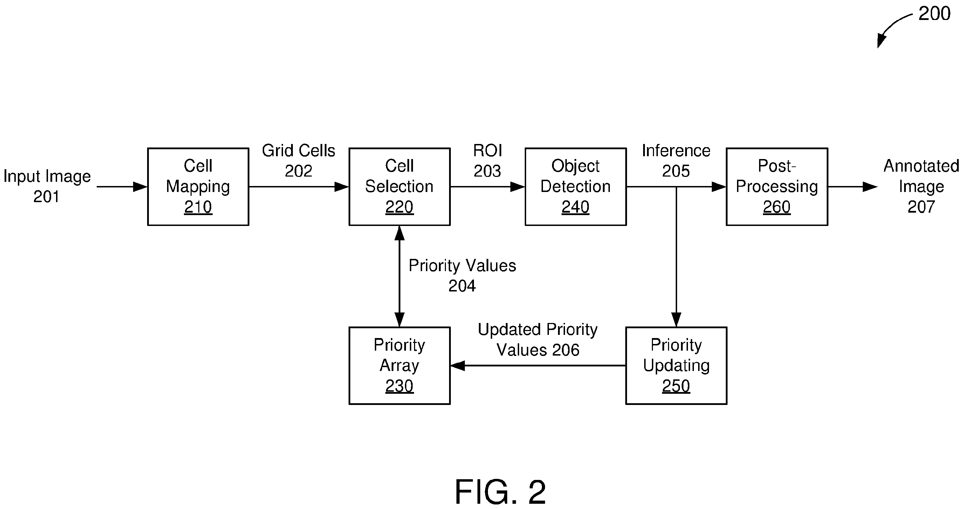

FIG. 2 shows a block diagram of an example image processor 200, according to some implementations. In some implementations, the image processor 200 may be one example of the image analysis component 120 of FIG 1. More specifically, the image processor 200 is configured to generate an annotated image 207 based on an input image 201. With reference for example to FIG. 1, the input image 201 may be one example of the input image 102 and the annotated image 207 may be one example of the inference 103.

The image processor 200 includes a cell mapping component 210, a cell selection component 220, a priority array 230, an object detection component 240, a priority updating component 250, and a post-processing component 260. The cell mapping component 210 is configured to map a number of grid cells 202 to the input image 201 so that each grid cell 202 includes or coincides with a respective portion of the input image 201. As such, each of the grid cells 202 represents a respective candidate region of the input image 201 that can be selected as the ROI for inferencing. In some implementations, the grid cells 202 may be uniform in size. In some other implementations, the grid cells 202 may vary in size. In some implementations, each grid cell 202 may overlap with at least one other grid cell 202. In some other implementations, no grid cell 202 may overlap with another grid cell 202.

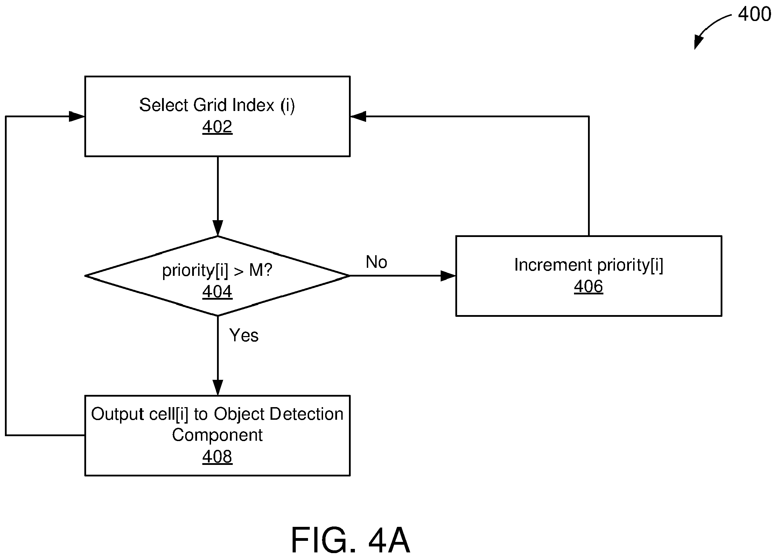

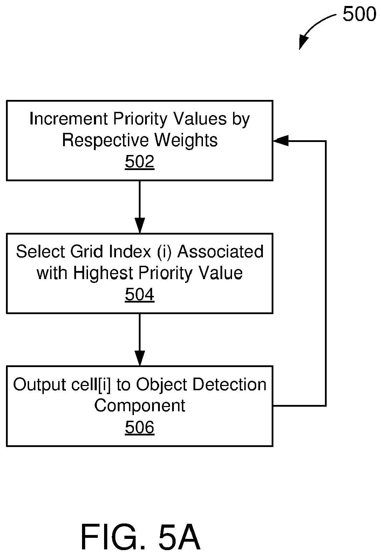

The cell selection component 202 selects one of the grid cells 202, as an ROI 203, to be provided as input to the object detection component 240. In some implementations, the cell selection component 202 may select the ROI 203 based on a set of priority values 204 assigned to the grid cells 202. For example, the priority array 230 may store a respective priority value 204 for each grid cell 202 mapped to the input image 201. In some implementations, the cell selection component 220 may select any grid cell 202 that is assigned a priority value 204 higher than a threshold priority value as the ROI 203 (such as described with reference to FIG. 4A). In some other implementations, the cell selection component 220 may select the grid cell 202 that is assigned the highest priority value 204 in the priority array 230 as the ROI 203 (such as described with reference to FIG. 5A).

In some aspects, each of the priority values 204 may be initialized to a minimum priority value (such as 0). As such, the priority values 204 may provide little (if any) value for selecting the initial ROI 203. In some implementations, the cell selection component 220 may iteratively select each of the grid cells 202 as the ROI 203 (according to a fixed or random pattern) when all of the priority values 204 in the priority array 230 are set to the minimum priority value. In some other implementations, the cell selection component 220 may prioritize the grid cells 202 according to various other factors (such as a change in pixel values that may indicate motion) when all of the priority values 204 in the priority array 230 are set to the minimum priority value. Still further, in some implementations, the cell selection component 220 may iteratively select only non-overlapping grid cells 202 (to perform a cursory scan of the entire image 201) when all of the priority values 204 in the priority array 230 are set to the minimum priority value.

The object detection component 240 generates an inference 205 associated with the selected ROI 203. In some implementations, the object detection component 240 may be one example of the object detection model 122 of FIG. 1. For example, the object detection component 240 may be a model that is trained or otherwise configured to detect objects of interest in images or video. Thus, the inference 205 may indicate whether one or more objects of interest are detected within the ROI 203. In some implementations, the object detection component 204 may be (or include) a neural network model. In some other implementations, the object detection component 204 may be (or include) a statistical model.

In some aspects, the inference 205 may indicate a size and location of any detected objects (also referred to as "detections") in the ROI 203. For example, each detection may be represented by a bounding box surrounding a portion of the ROI 203 in which a respective object of interest is detected. In some implementations, the inference 205 may further indicate a respective confidence level associated with each detection. For example, the confidence level may be a value between 0 and 1 indicating a likelihood or probability that the associated bounding box actually includes an object of interest.

The post-processing component 260 aggregates the inferences 205 generated for the current input image 201 (and one or more previous input images 201) to produce the annotated image 207. In some implementations, the post-processing component 260 may resolve any redundancies between the current inference 205 and one or more previous inferences 205 output by the object detection component 240 (such as detections cropped by the edge of the ROI 203). In some other implementations, the post-processing component 260 may resolve any discrepancies between the current inference 205 and one or more previous inferences 205 output by the object detection component 240 (such as caused by an object moving too quickly between frames).

In some implementations, the priority updating component 250 may change or update one or more of the priority values 204 in the priority array 230 based on the inference 205 produced by the object detection component 240. For example, the priority updating component 250 may map a set of detections associated with the ROI 203 to an updated priority value 206 based on the confidence levels associated with the detections. More specifically, higher confidence levels may be mapped to higher priority values. In some implementations, the updated priority value 206 for the $i^{th}$ grid cell 202 may be expressed as a function ($F$) of a set of detections ($d[i]$) associated with the $i^{th}$ grid cell 202:

$$updated\_priority = F(d[i]) * M \qquad (1)$$

where $F(d[i])$ is a value between 0 and 1 representing the highest confidence level associated with any of the detections *d*[*i*] and M is a predetermined scaling factor. If the inference 205 does not include any detections (*d*[*i*] = 0), the priority updating component 250 may reset the priority value 204 for the corresponding grid cell 202 to the minimum priority value.

In some implementations, the priority updating component 250 may further update the priority values 204 assigned to one or more neighboring grid cells 202. As used herein, the term "neighboring grid cell" refers to any grid cell 202 that at least partially overlaps the current ROI 203. For example, some detections in the inference 205 may be located in a portion of the ROI 203 that overlaps another grid cell 202. Thus, if a given detection is located closer to the center of the current ROI 203, the priority updating component 250 may consider the confidence level associated with that detection in determining the updated the priority value 206 for the ROI 203 (such as shown in Equation 1). However, if a given detection is located closer to the center of an adjacent grid cell 202, the priority updating component 250 may determine an updated priority value 206 for the adjacent grid cell 202 based, at least in part, on that detection (such as in accordance with Equation 1).

Each updated priority value 206 may replace a current or existing priority value 204 stored in the priority array 230 for a respective grid cell 202. For example, the updated priority value 206 associated with the *i*th grid cell 202 may replace the current priority value 204 assigned to the *i*th grid cell 202 in the priority array 230. In some implementations, the cell selection component 220 may proceed to select another grid cell 202, as the next ROI 203 to be provided to the object detection component 240, based on the priority values 204 (and any updated priority values 206) stored in the priority array 230. As such, the cell selection component 220 may iteratively select a new grid cell 202, as the ROI 203, based on the inference 205 associated with the previous ROI 203. In some aspects, the image processor 200 may iteratively perform the inferencing operation on the current input image 201 until a predetermined condition is satisfied (such as described with reference to FIG. 1).

After the predetermined condition is satisfied, the image processor 200 may receive the next input image 201 in the series of input images. The cell mapping component 210 remaps the grid cells 202 to the new input image 201 so that each grid cell 202 includes or coincides with a respective portion of the new input image 201. More specifically, each grid cell 202 may be mapped to co-located regions across multiple input images 201. As used herein, the term "co-located" regions refers to the same relative location (such as the top-left corner) in different images or video frames. The cell selection component 220 selects one of the grid cells 202 coinciding with the new input image 201 to be provided, as the ROI 203, to the object detection component 240. More specifically, the cell selection component 220 may select the ROI 203 based on the current priority values 204 stored in the priority array 230. As a result, the priority values 204 remain associated with co-located regions across multiple input images 201.

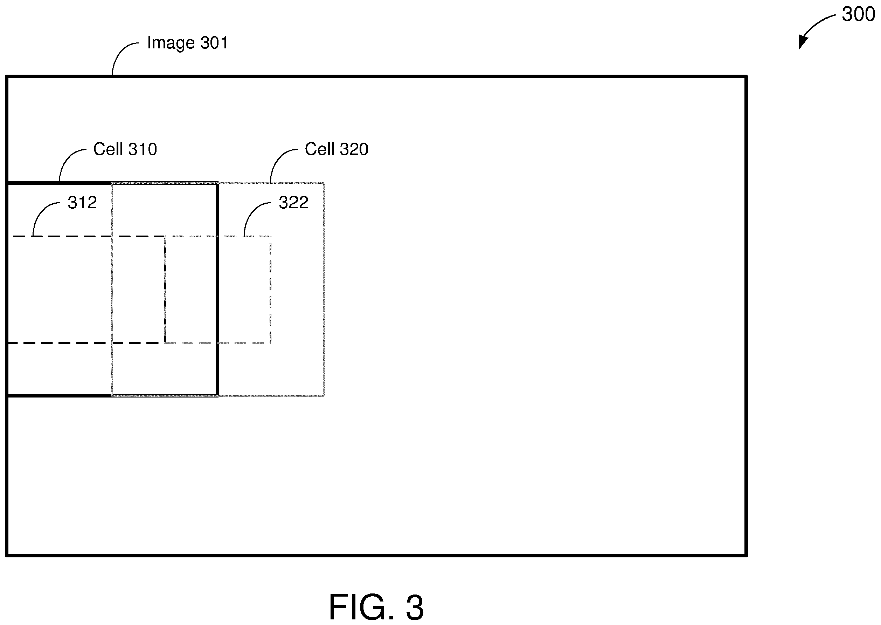

FIG. 3 shows an example mapping 300 of grid cells 310 and 320 to an input image 301, according to some implementations. In some aspects, the mapping 300 may be performed by the cell selection component 220 of FIG. 2. With reference for example to FIG. 2, the image 301 may be one example of the input image 201 and each of the grid cells 310 and 320 may be one example of a respective grid cell 202. For simplicity, only two grid cells 310 and 320 are shown in FIG. 3. However, in actual implementations, the mapping 300 may include any number of grid cells similar, if not identical, to the grid cells 310 and 320.

As shown in FIG. 3, the first grid cell 310 is adjacent to the left edge or border of the image 301 and the left-hand portion of the second grid cell 320 overlaps the right-hand portion of the first grid cell 310. The upper and lower portions of the first grid cell 310 may partially overlap with neighboring grid cells (not shown for simplicity) located above and below the first grid cell 310, respectively. Similarly, the upper and lower portions of the second grid cell 320 may partially overlap with neighboring grid cells (not shown for simplicity) located above and below the second grid cell 320. Further, the right-hand portion of the second grid cell 320 may overlap with a neighboring grid cell (not shown for simplicity) located to the right of the second grid cell 320.

The first grid cell 310 has a cell center 312. Pixels of the input image 301 that are located within the cell center 312 are closer to the center of the first grid cell 310 than the center of any other grid cell associated with the mapping 300. For example, the cell center 312 extends, in a horizontal direction, from the left edge of the cell 310 to the midpoint of the overlapping region between the first grid cell 310 and the second grid cell 320. The cell center 312 also extends, in a vertical direction, from the midpoint of the overlapping region between the first grid cell 310 and the neighboring grid cell below to the midpoint of the overlapping region between the first grid cell 310 and the neighboring grid cell above.

The second grid cell 320 has a cell center 322. Pixels of the input image 301 that are located within the cell center 322 are closer to the center of the second grid cell 320 than the center of any other grid cell associated with the mapping 300. For example, the cell center 322 extends, in the horizontal direction, from the midpoint of the overlapping region between the first grid cell 310 and the second grid cell 320 to the midpoint of the overlapping region between the second grid cell 320 and the neighboring grid cell to the right. The cell center 322 also extends, in a vertical direction, from the midpoint of the overlapping region between the second grid cell 320 and the neighboring grid cell below to the midpoint of the overlapping region between the second grid cell 320 and the neighboring grid cell above.

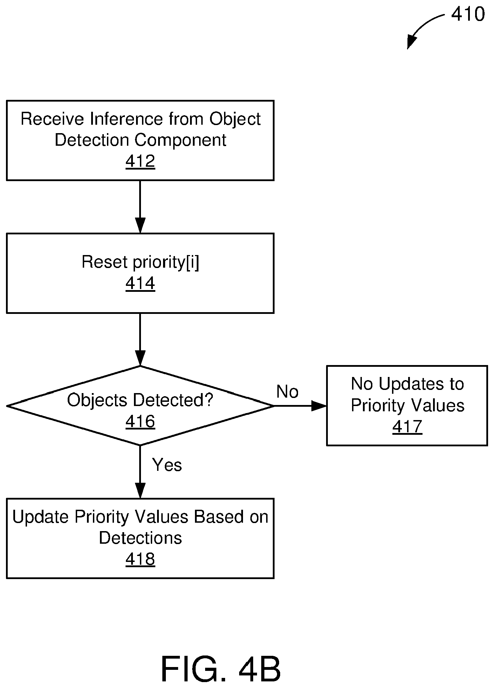

FIGS. 4A and 4B show illustrative flowcharts depicting an example inferencing operation, according to some implementations. In some aspects, the example inferencing operation may be performed by the image processor 200 of FIG. 2. More specifically, FIG. 4A shows an example cell selection operation 400 that can be performed by the cell selection component 220 and FIG. 4B shows an example priority updating operation 410 that can be performed by the priority updating component 250.

The cell selection component 220 selects a grid index (*i*) that identifies a respective grid cell 202 (*cell*[*i*]) mapped to the input image 201 (402). The cell selection component 220 compares the priority value 204 (*priority*[*i*]) assigned to *cell*[*i*] with a threshold priority value (M) (404). If *priority*[*i*] is not greater than M (as tested at 404), the cell selection component 220 increments *priority*[*i*] (406) and proceeds to select a new grid index *i* (402). However, if *priority*[*i*] is greater than M (as tested at 404), the cell selection component 220 proceeds to output *cell*[*i*], as the ROI 203, to the object detection component 240 (408).

The priority updating component 250 receives an inference 205 from the object detection component 240 based on *cell*[*i*] (412) and resets *priority*[*i*] to the minimum priority value (414). The priority updating component 250 determines whether the inference 205 indicates that an object of interest is detected in *cell*[*i*] (416). If the inference 205 does not include any detections (as tested at 416), the priority updating component 250 does not update any of the priority values 204 in the priority array 230 (417). However, if the inference 205 includes one or more detections (as tested at 416), the priority updating component 250 proceeds to update one or more of the priority values 204 in the priority array 230 (such as by determining one or more updated priority values 206, respectively) based on the detections (418).

In some implementations, the priority updating component 250 may determine an updated priority value 206 for the current grid index *i* as a function of the detections (*d*[*i*]) attributed to *cell*[*i*]. For example, the updated *priority*[*i*] may be determined according to Equation 1. In some other implementations, the priority updating component 250 may determine an updated priority value 206 for another grid index (such as *i* + 1 or *i* - 1, among other possibilities) based one or more detections attributed to a neighboring grid cell. Whether a given detection is attributed to *cell*[*i*] or a neighboring grid cell may depend on whether the detection is located within the cell center of *cell*[*i*] or the cell center of the neighboring grid cell.

With reference for example to FIG. 3, any detections located in the cell center 312 may be attributed to the first grid cell 310, even if such detections are included in an inference for the second grid cell 320. Similarly, any detections located in the cell center 322 may be attributed to the second grid cell 320, even if such detections are included in an inference for the first grid cell 310. Upon completion of the priority updating operation 410 (at 417 or 418), the cell selection component 220 may proceed to select a new grid index *i* (402). In this manner, the cell selection component 220 may iteratively scan each of the grid cells 202 mapped to the input image 201 to identify ROIs 203 for inferencing.

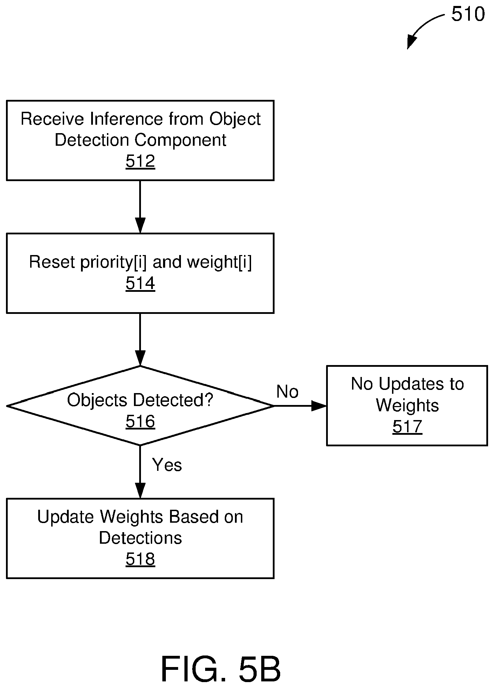

FIGS. 5A and 5B show illustrative flowcharts depicting another example inferencing operation, according to some implementations. In some aspects, the example inferencing operation may be performed by the image processor 200 of FIG. 2. More specifically, FIG. 5A shows an example cell selection operation 500 that can be performed by the cell selection component 220 and FIG. 5B shows an example priority updating operation 510 that can be performed by the priority updating component 250.

In the example of FIGS. 5A and 5B, the priority array 230 may be further configured to store a respective weight (*weight*[*i*]) for each priority value 204 (*priority*[*i*]) in the priority array 230. In some aspects, the image processor 200 may use the weights to update the priority values 206. More specifically, each of the weights represents an amount by which a respective priority value 204 will be incremented or otherwise updated. In some implementations, each of the weights may be initialized to a predetermined value (such as 1).

The cell selection component 220 increments each priority value 204 in the priority array 230 by its respective weight (502). For example, *priority*[*i*] = *priority*[*i*] + *weight*[*i*]. The cell selection component 220 further selects the grid index (*i*) associated with the highest priority value 204 in the priority array 230 (504). As such, *priority*[*i*] represents the highest priority value 204 among any of the priority values 206 in the priority array 230. The cell selection component 220 outputs the grid cell 202 identified by the selected grid index *i* (*cell*[*i*]), as the ROI 203, to the object detection component 240 (506).

The priority updating component 250 receives an inference 205 from the object detection component 240 based on *cell*[*i*] (512) and resets *priority*[*i*] and *weight*[*i*] to minimum priority and weight values, respectively

(514). The priority updating component 250 determines whether the inference 205 indicates that an object of interest is detected in *cell*[*i*] (516). In some implementations, the minimum weight may be significantly lower than the initial weight value (such as 0.1). If the inference 205 does not include any detections (as tested at 516), the priority updating component 250 does not update any of the weights in the priority array 230 (517).

If the inference 205 includes one or more detections (as tested at 516), the priority updating component 250 proceeds to update one or more of the weights in the priority array 230 based on the detections (518). In some implementations, the priority updating component 250 may determine an updated weight for the current grid index *i* as a function of the detections (*d*[*i*]) attributed to *cell*[*i*] (using a function similar to Equation 1). In some other implementations, the priority updating component 250 may determine an updated weight for another grid index (such as *i* + 1 or *i* - 1, among other possibilities) based one or more detections attributed to a neighboring grid cell.

Upon completion of the priority updating operation 510 (at 517 or 518), the cell selection component 220 may proceed to increment each priority value 204 in the priority array 230 by its respective weight (502), then select a new grid index *i* associated with the highest priority value 204 in the priority array 230 (504). In this manner, the cell selection component 220 may iteratively scan the highest priority grid cell 202 at any given time to identify ROIs 203 for inferencing.

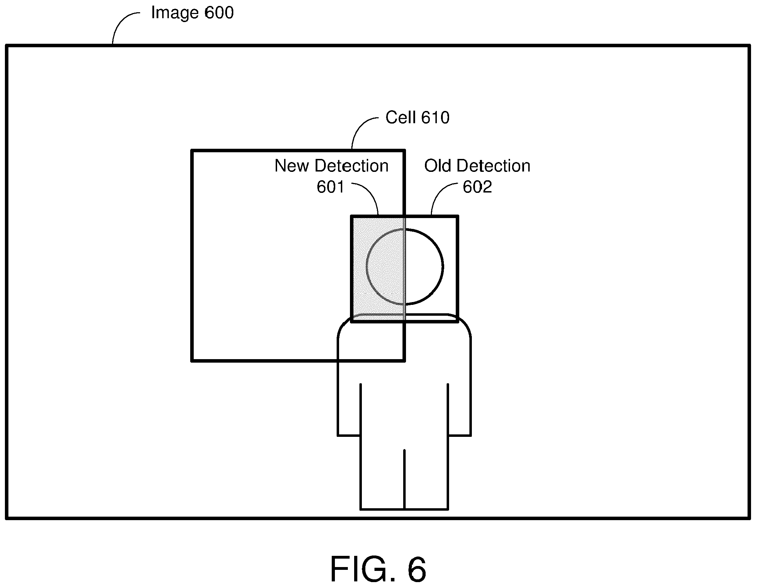

Aspects of the present disclosure recognize that the iterative inferencing operations described with reference to FIGS. 4A-5B may produce duplicate or redundant detections over time. FIG. 6 shows example detections 601 and 602 resulting from an inferencing operation performed on an input image 600, according to some implementations. More specifically, the detection 601 is a new detection inferred from a selected grid cell 610 and the detection 602 is an old detection 602 inferred from a neighboring grid cell (not shown for simplicity). In some implementations, the inferencing operation may be performed by the image processor 200 of FIG. 2. With reference for example to FIG. 2, the grid cell 610 may be the currently selected ROI 203 and the new detection 601 may be included in an inference 203 associated with the selected ROI 203.

As shown in FIG. 6, the detections 601 and 602 map to the same object of interest. However, each of the detections 601 and 602 is included in a separate inference 204 output by the object detection component 240. In some aspects, the post-processing component 260 of the image processor 200 may be configured to resolve redundant detections (including duplicate detections and detections that are no longer relevant) produced by the iterative inferencing operation. In some implementations, the post-processing component 260 may purge or otherwise remove older detections located in the cell center of the current ROI 203. In some other implementations, the post-processing component 260 may purge or otherwise remove older detections that are no longer located at the edge of the current ROI 203. Still further, in some implementations, the post-processing component 260 may purge or otherwise remove one or more duplicate detections located at the edge of the current ROI 203. As used herein, the term "cell edge" refers to any region within a given cell outside of the cell center (such as the region between the cell center and the cell border).

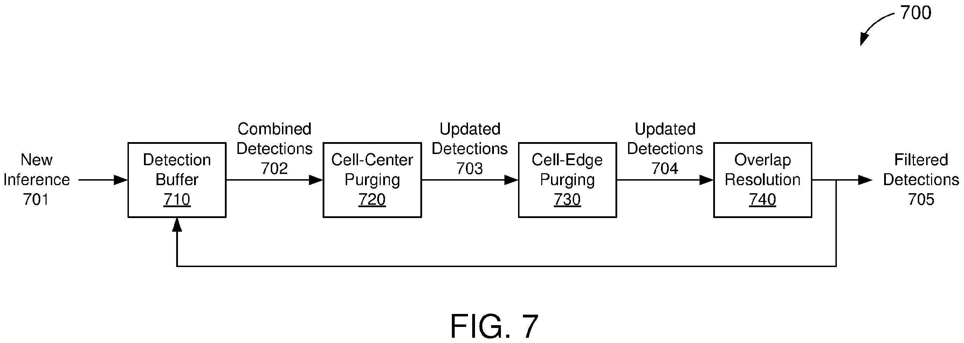

FIG. 7 shows a block diagram of an example inference post-processor 700, according to some implementations. The inference post-processor 700 is configured to eliminate redundant detections in new inferences 701 produced by an object detection model (such as the object detection component 240 of FIG. 2). In some implementations, the inference post-processor 700 may be one example of the post-processing component 260 of FIG. 2. With reference for example to FIG. 2, the new inference 701 may be one example of the inference 205 associated with a particular ROI 203.

The inference post-processor 700 includes a detection buffer 710, a cell-center purging component 720, a cell-edge purging component 730, and an overlap resolution component 740. The detection buffer 710 is configured to store or buffer filtered detections 705 produced by the inference post-processor 700 based on previously received inferences 701. In some implementations, the detection buffer 710 may produce a set of combined inferences 702 by merging or combining the buffered detections with any detections included in the new inference 701.

The cell-center purging component 720 is configured to filter the combined inferences 702 by removing redundancies in the cell center of the current ROI 203. Aspects of the present disclosure recognize that older detections located in the cell center of the ROI 203 may become stale or otherwise irrelevant in view of the new inference 701. Thus, in some implementations, the cell-center purging component 720 may produce a set of updated detections 703 by purging or discarding any older detections located in the cell center of the current ROI 203.

The cell-edge purging component 730 is configured to filter the updated detections 703 by removing redundancies in the cell edge of the current ROI 203. As described with reference to FIG. 3, detections located at the edge of the ROI 203 may be attributed to a neighboring grid cell due to the proximity of the detections to the center of the neighboring grid cell. Aspects of the present disclosure recognize that older detections attributed to the current ROI 203 may become stale or otherwise irrelevant in view of the new inference 701. Thus, in some implementations, the cell-edge purging component 730 may produce another set of updated detections 704 by purging or discarding any older detections that are located at the edge of the current ROI 203 and are attributed to the ROI 203.

The overlap resolution component 740 is configured to filter the updated detections 704 by removing one or more duplicate detections in the cell edge of the current ROI 203. As described with reference to FIG. 6, new detections located at the edge of the ROI 203 may overlap with old detections associated with a neighboring grid cell. Such overlapping detections may be bounding boxes that map to the same object of interest. Aspects of the present disclosure recognize that, given a set of overlapping bounding boxes, the largest bounding box is likely the most accurate (or encompasses the largest percentage of the object of interest). Thus, in some implementations, the overlap resolution component 740 may produce a set of filtered detections 705 by removing or discarding any duplicate detections that do not represent the largest overlapping bounding box.

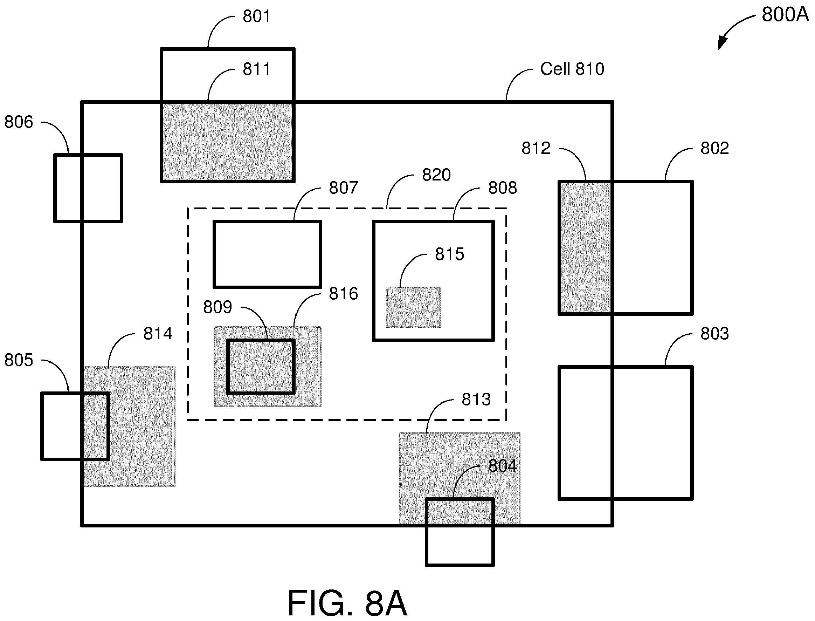

FIGS. 8A-8D show example detections 800A-800D, respectively, coinciding with a grid cell 810 at various stages of an inference post-processing operation. In some aspects, the example post-processing operation may be performed by the post-processing component 260 of FIG. 2 or the inference post-processor 700 of FIG. 7. With reference for example to FIG. 2, the grid cell 810 may be one example of the ROI 203.

In some implementations, the set of detections 800A shown in FIG. 8A may be one example of the combined detection 702 produced by the detection buffer 710 of FIG. 7. More specifically, the set of detections 800A includes a number of old detections 801-809 (depicted as bounding boxes with thick borders) and a number of new detections 811-816 (depicted as bounding boxes that are shaded in gray). The new detections 811-816 may be included in a new inference associated with the grid cell 810 (such as the new inference 701 of FIG. 7). By contrast, the old detections 801-809 may be stored or buffered by the detection buffer 710 as a result of inferences associated with neighboring grid cells or prior inferences associated with the grid cell 810.

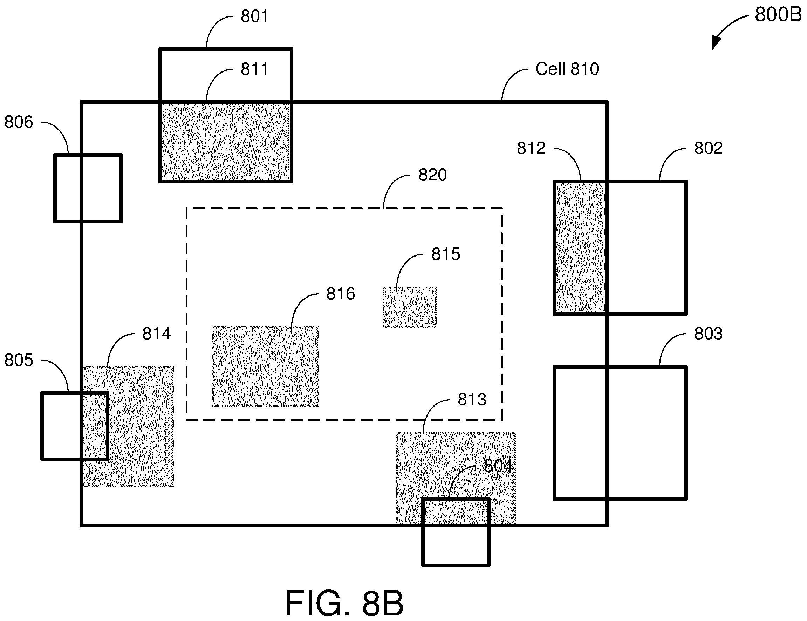

In some implementations, the set of detections 800B shown in FIG. 8B may be one example of the updated detections 703 produced by the cell-center purging component 720 of FIG. 7. With reference for example to FIG. 8A, the cell-center purging component 720 removes the old detections 807-809 located in a cell center 820 of the grid cell 810. As shown in FIG. 8B, the cell center 820 only includes the new detections 815 and 816 as a result of removing the old detections. More specifically, the set of detections 800B includes only the old detections 801-806 and the new detections 811-816.

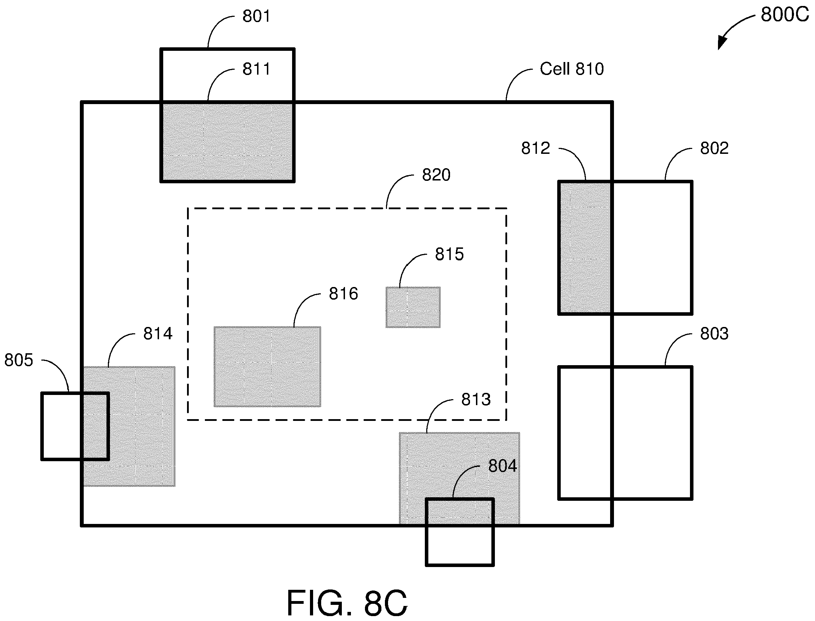

In some implementations, the set of detections 800C shown in FIG. 8C may be one example of the updated detections 704 produced by the cell-edge purging component 730 of FIG. 7. With reference for example to FIG. 8B, the cell-edge purging component 730 removes the detection 806 (which has a geometric center located inside the cell edge of the grid cell 810) but does not remove the detection 803 (which has a geometric center located outside the cell edge of the grid cell 810). As a result, the set of detections 800C includes only the old detections 801-805 and the new detections 811-816.

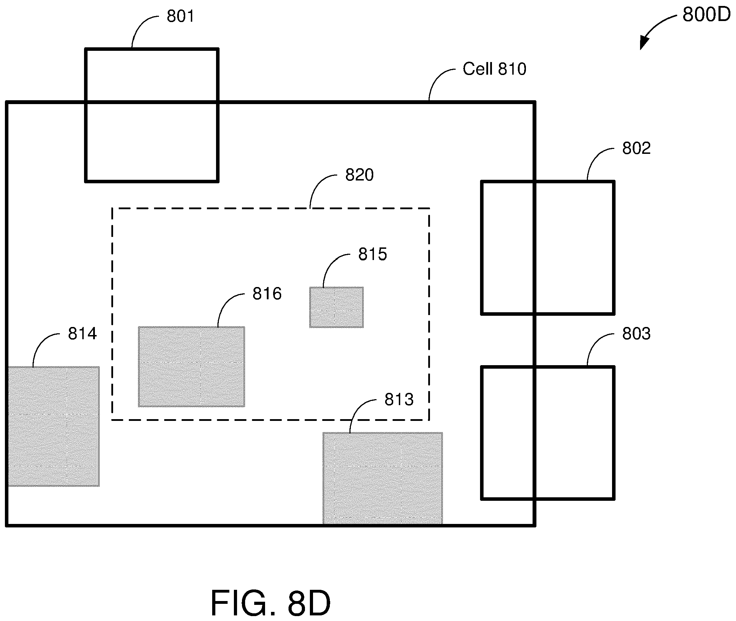

In some implementations, the set of detections 800D shown in FIG. 8D may be one example of the filtered detections 705 produced by the overlap resolution component 740 of FIG. 7. With reference for example to FIG. 8C, the overlap resolution component 740 removes the new detections 811 and 812 which overlap with (larger) old detections 801 and 802, respectively, and removes the old detections 804 and 805 which overlap with (larger) new detections 813 and 814, respectively. As a result, the set of detections 800D includes only the old detections 801-803 and the new detections 813-816.

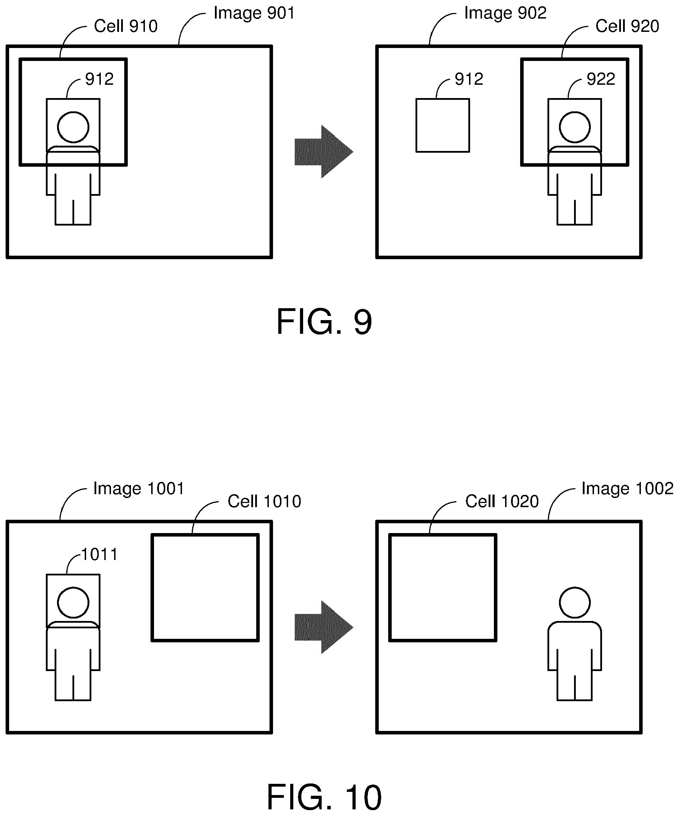

Aspects of the present disclosure also recognize that the iterative inferencing operations described with reference to FIGS. 4A-5B may produce discrepancies in one or more detections over time. FIG. 9 shows example detections 912 and 922 resulting from inferencing operations performed on a series of input images 901 and 902, according to some implementations. More specifically, the first detection 912 is inferred from a portion of the input image 901 coinciding with a first grid cell 910 and the second detection 922 is inferred from a portion of the input image 902 coinciding with a second grid cell 920 having a different location than the first grid cell 910. In some implementations, the inferencing operations may be performed by the image processor 200 of FIG. 2. With reference for example to FIG. 2, each of the input images 901 and 902 may be one example of the input image 201 (captured at different times).

As shown in FIG. 9, an object of interest moves from the left side of the input image 901 to the right side of the input image 902. However, the image processor 200 generates an inference for the portion of the input image 902 coinciding with the second grid cell 920 without first scanning the portion of the input image 902 coinciding with the first grid cell 910. As a result, the image processor 200 may be unaware that input image 902 only includes a single object of interest. In some aspects, the post-processing component 260 of the image processor 200 may be configured to resolve duplicate detections caused by moving objects detected by the iterative inferencing operation. In some implementations, the post-processing component 260 may refrain from outputting a new detection until it is relatively certain that the new detection is not a duplicate detection for the same object of interest.

FIG. 10 shows example inferences resulting from inferencing operations performed on a series of input images 1001 and 1002, according to some implementations. More specifically, no detections are inferred from a portion of the input image 1001 coinciding with a first grid cell 1010 and no detections are inferred from a portion of the input image 1002 coinciding with a second grid cell 1020 having a different location than the first grid cell 1010. However, in the example of FIG. 10, an old detection 1011 is inferred from a portion of the input image 1001 coinciding with another grid cell (not shown for simplicity). In some implementations, the inferencing operations may be performed by the image processor 200 of FIG. 2. With reference for example to FIG. 2, each of the input images 1001 and 1002 may be one example of the input image 201 (captured at different times).

As shown in FIG. 10, an object of interest moves from the left side of the input image 1001 to the right side of the input image 1002. However, the image processor 200 generates an inference for the portion of the input image 1002 coinciding with the second grid cell 1020 without first scanning the portion of the input image 1002 coinciding with the first grid cell 1010. As a result, the image processor 200 may be unaware that the input image 1000 still includes an object of interest. In some aspects, the post-processing component 260 of the image processor 200 may be configured to resolve missing detections caused by moving objects detected by the iterative inferencing operation. In some implementations, the post-processing component 260 may refrain from removing an old detection until it is relatively certain that the old detection has not moved to a new location.

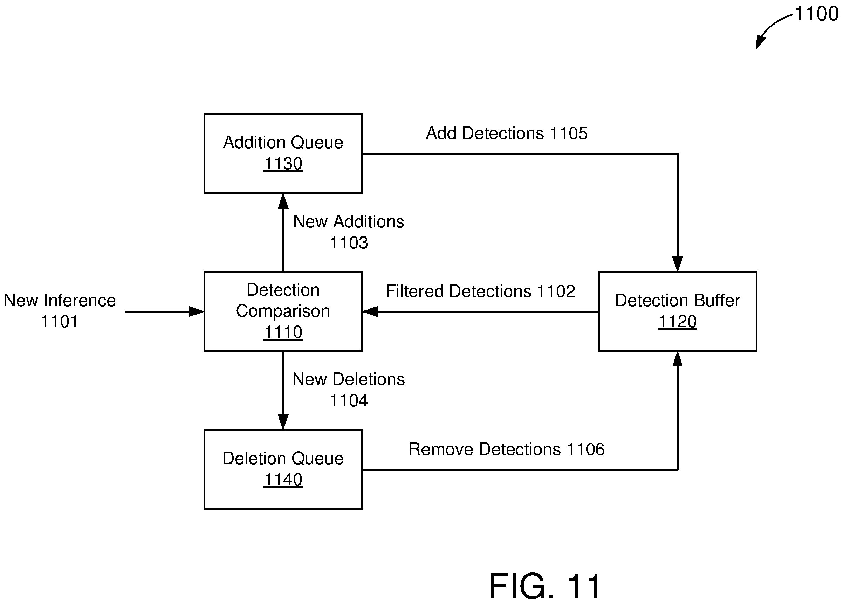

FIG. 11 shows another block diagram of an example inference post-processor 1100, according to some implementations. The inference post-processor 1100 is configured to eliminate discrepancies caused by moving objects in new inferences 1101 output by an object detection model. In some implementations, the inference post-processor 1100 may be one example of the post-processing component 260 of FIG. 2. With reference for example to FIG. 2, the new inference 1101 may be one example of the inference 205 associated with a particular ROI 203.

The inference post-processor 1100 includes a detection comparison component 1110, a detection buffer 1120, an addition queue 1130, and a deletion queue 1140. The detection buffer 1120 is configured to store or buffer filtered detections 1102 produced by the inference post-processor 1100 based on previously received inferences 1101. The inference comparison component 1110 is configured to compare the filtered detections 1102 with any detections included in the new inference 1101 to identify changes among the detections associated with the current ROI 203. Example changes may include a presence of a new detection 1103 that does not overlap with any old detections in the ROI 203 (also referred to as a "new addition") or an absence of an old detection 1104 that does not overlap with any new detections in the ROI 203 (also referred to as a "new deletion").

The new additions 1103 are added to the addition queue 1130. In some implementations, the addition queue 1130 may add a detection 1105 (corresponding to a new addition 1103) to the detection buffer 1120 after a threshold number of iterations of the inferencing operation are completed to ensure that the set of filtered detections 1102 does not include any duplicate detections for moving objects (such as described with reference to FIG. 9). With reference for example to FIG. 9, the first detection 912 may appear to have moved after an inferencing operation is performed on the portion of the image 902 coinciding with the first grid cell 910. To avoid outputting duplicate detections for the same object of interest, the addition queue 1130 may add the second detection 922 to the set of filtered detections 1102 after the first detection 912 has been dropped from the set.

The new deletions 1104 are added to the deletion queue 1140. In some implementations, the deletion queue 1140 may remove a detection 1106 (corresponding to a new deletion 1104) from the detection buffer 1120 after a threshold number of iterations of the inferencing operation are completed to ensure that there are no missing detections for moving objects in the set of filtered detections 1102 (such as described with reference to FIG. 10). With reference for example to FIG. 10, the old detection 1011 may appear to have moved after an inferencing operation is performed on the portion of the image 1002 coinciding with the first grid cell 1010. To avoid dropping all detections associated with the object of interest, the deletion queue 1140 may remove the old detection 1011 from the set of filtered detections 1102 after a new detection associated with the object of interest has been added to the set.

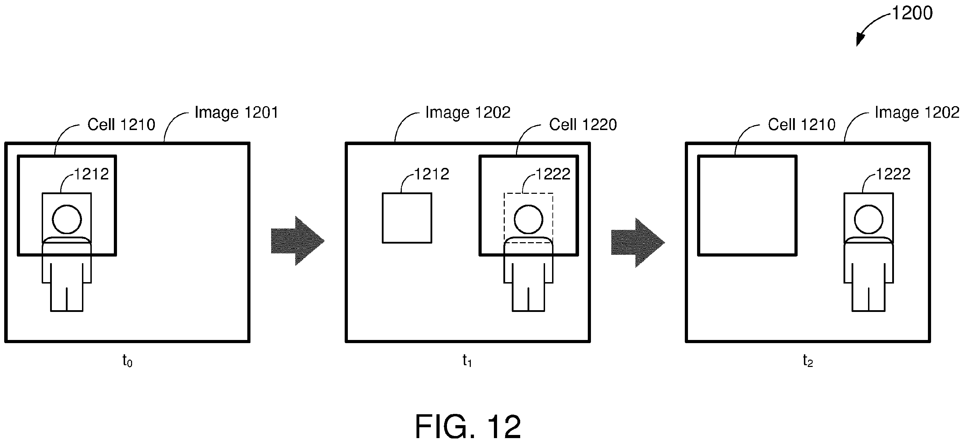

FIG. 12 shows example detections resulting from inferencing operations performed on a series of input images 1201 and 1202, according to some implementations. In some implementations, the inferencing operations may be performed by the image processor 200 of FIG. 2. With reference for example to FIG. 2, each of the input images 1201 and 1202 may be one example of the input image 201 (captured at different times).

As shown in FIG. 12, an object of interest (depicted as a person) moves from the left side of the input image 1201, at time $t_0$, to the right side of the input image 1202, at time $t_1$. More specifically, at time $t_0$, a first detection 1212 is inferred from a portion of the input image 1201 coinciding with a first grid cell 1210. However, in the example of FIG. 12, no detections are inferred from any other portions of the input image 1201.

At time $t_1$, an inferencing operation is performed on a portion of the input image 1202 coinciding with a second grid cell 1220, which results in a second detection 1222. With reference for example to FIG. 11, the detection comparison component 1110 determines that the second detection 1222 was not present before and proceeds to add the second detection 1222 to the addition queue 1130 (as a new addition 1103). At this time, the set of filtered detections 1102 still includes the first detection 1212. Accordingly, the addition queue 1130 does not add the second detection 1222 to the set of filtered detections 1102 at time $t_1$.

At time $t_2$, an inferencing operation is performed on a portion of the image 1202 coinciding with the first grid cell 1210, which results in no detections. Accordingly, the first detection 1212 is removed from the set of filtered detections 1102. Upon removing the first detection 1212 from the set of filtered detections 1102, the addition queue 1130 may add the second detection 1222 to the set of filtered detections 1102 in the detection buffer 1130. Thus, as shown in FIG. 12, the annotated image output by the image processor 200 at any given time includes a single bounding box that tracks the object of interest (in contrast to the image 902 of FIG. 9).

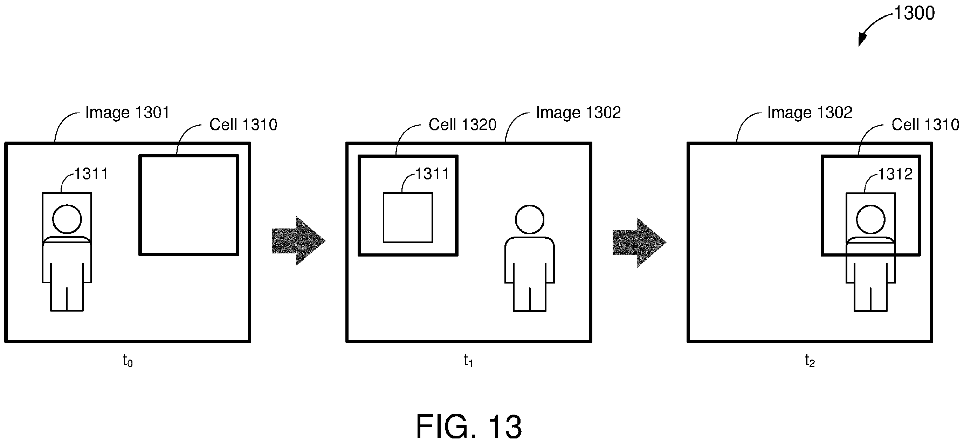

FIG. 13 shows example detections resulting from inferencing operations performed on a series of input images 1301 and 1302, according to some implementations. In some implementations, the inferencing operations may be performed by the image processor 200 of FIG. 2. With reference for example to FIG. 2, each of the input images 1301 and 1302 may be one example of the input image 201 (captured at different times).

As shown in FIG. 13, an object of interest (depicted as a person) moves from the left side of the input image 1301, at time $t_0$, to the right side of the input image 1302, at time $t_1$. More specifically, at time $t_0$, no detections are inferred from a portion of the input image 1301 coinciding with a first grid cell 1310. However, in the example of FIG. 13, an old detection 1311 is inferred from a portion of the input image 1301 coinciding with another grid cell (not shown for simplicity).

At time $t_1$, an inferencing operation is performed on a portion of the input image 1302 coinciding with a second grid cell 1320, which does not result in any detections. With reference for example to FIG. 11, the detection comparison component 1110 determines that the old detection 1311 is no longer present and proceeds to add the old detection 1311 to the deletion queue 1140 (as a new deletion 1104). At this time, the set of filtered detections 1102 does not yet include a detection associated with the new location of the object of interest. Accordingly, the deletion queue 1140 does not remove the old detection 1311 from the set of filtered detections 1102 at time $t_1$.

At time $t_2$, an inferencing operation is performed on a portion of the image 1302 coinciding with the first grid cell 1310, which results in a new detection 1312. Accordingly, the new detection 1312 is added to the set of filtered detections 1102. Upon adding the new detection 1312 to the set of filtered detections 1102, the addition queue 1130 may remove the old detection 1311 from the set of filtered detections 1102 in the detection buffer 1130. Thus, as shown in FIG. 13, the annotated image output by the image processor 200 at any given time includes a single bounding box that tracks the object of interest (in contrast to the image 1002 of FIG. 10).

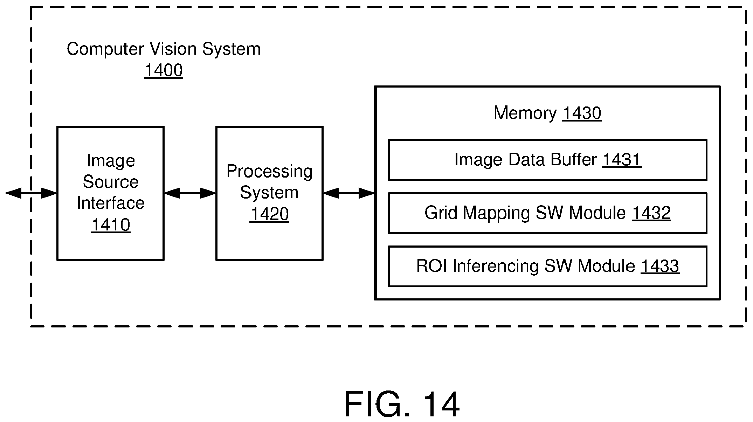

FIG. 14 shows a block diagram of an example computer vision system 1400, according to some implementations. In some implementations, the computer vision system 1400 may be one example of the image analysis component 120 of FIG. 1 or the image processor 200 of FIG. 2.

The computer vision system 1400 includes an image source interface 1410, a processing system 1420, and a memory 1430. The image source interface 1410 is configured to receive input images from an image source (such as the image capture component 110 of FIG. 1). The memory 1430 may include an image data buffer 1431 to store the received input images and any associated image data produced as a result of one or more inferencing operations.

The memory 1430 also may include a non-transitory computer-readable medium (including one or more non-volatile memory elements, such as EPROM, EEPROM, Flash memory, a hard drive, and the like) that may store at least the following software (SW) modules:

- a grid mapping SW module 1432 to map a plurality of grid cells to an input image so that each grid cell of the plurality of grid cells includes a respective portion of the input image; and
- an ROI inferencing SW module 1433 to perform an inferencing operation on the portion of the input image included in a first grid cell of the plurality of grid cells, where the inferencing operation is associated with an object detection model, and to further perform the inferencing operation on a second grid cell of the plurality of grid cells based at least in part on a result of the inferencing operation performed on the portion of the input image included in the first grid cell.

Each software module includes instructions that, when executed by the processing system 1420, causes the computer vision system 1400 to perform the corresponding functions.

The processing system 1420 may include any suitable one or more processors capable of executing scripts or instructions of one or more software programs stored in the computer vision system 1400 (such as in the memory 1430). For example, the processing system 1420 may execute the grid mapping SW module 1432 to map a plurality of grid cells to an input image so that each grid cell of the plurality of grid cells includes a respective portion of the input image. The processing system 1420 may execute the ROI inferencing SW module 1433 to perform an inferencing operation on the portion of the input image included in a first grid cell of the plurality of grid cells, where the inferencing operation is associated with an object detection model, and to further perform the inferencing operation on a second grid cell of the plurality of grid cells based at least in part on a result of the inferencing operation performed on the portion of the input image included in the first grid cell.

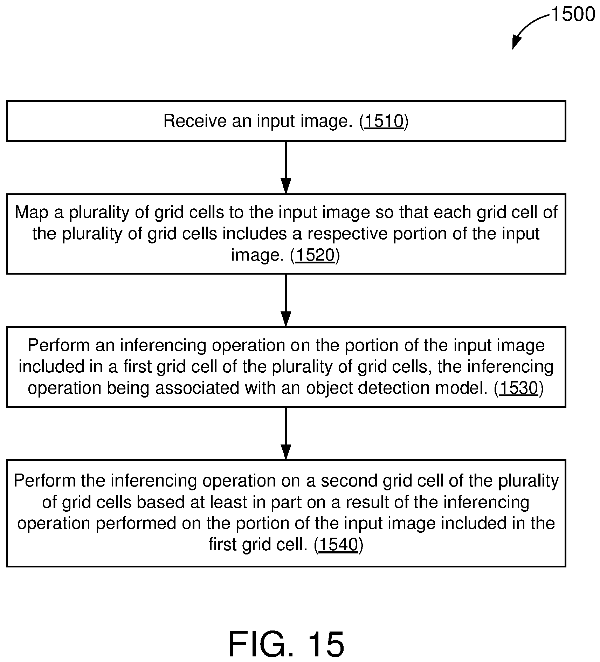

FIG. 15 shows an illustrative flowchart depicting an example inferencing operation 1500, according to some implementations. In some implementations, the example operation 1500 may be performed by a computer vision system such as the computer vision system 1400 of FIG. 14, the image processor 200 of FIG. 2, or the image analysis component 120 of FIG. 1.

The computer vision system receives an input image (1510). The computer vision system maps a plurality of grid cells to the input image so that each grid cell of the plurality of grid cells includes a respective portion of the input image (1520). The computer vision system performs an inferencing operation on the portion of the input image included in a first grid cell of the plurality of grid cells, where the inferencing operation is associated with an object detection model (1530). The computer vision system performs the inferencing operation on a second grid cell of the plurality of grid cells based at least in part on a result of the inferencing operation performed on the portion of the input image included in the first grid cell (1540).

In some aspects, the computer vision system may further assign a respective priority value to each of the plurality of grid cells, where the inferencing operation is performed on the portion of the input image included in the first grid cell based on the priority value assigned to the first grid cell, and update the priority value assigned to the first grid cell based on the result of the inferencing operation performed on the portion of the input image included in the first grid cell. In some implementations, the result of the inferencing operation may indicate whether an object of interest is detected in the portion of the input image included in the first grid cell. In some implementations, the priority value assigned to the first grid cell may be updated to a first value if the result of the inferencing operation indicates that no objects of interest are detected and may be updated to a second value if the result of the inferencing operation indicates that an object of interest is detected in the portion of the input image included in the first grid cell, where the first value is lower than the second value.

In some aspects, the computer vision system may further update the priority value assigned to the second grid cell based on the result of the inferencing operation performed on the portion of the input image included in the first grid cell. In some implementations, the result of the inferencing operation performed on the portion of the input image included in the first grid cell may indicate that an object of interest is detected at an edge of the first grid cell overlapping the second grid cell. In some implementations, the inferencing operation may be performed on the portion of the input image included in the second grid cell based on the updated priority value assigned to the second grid cell.

In some aspects, the computer vision system may further compare the result of the inferencing operation performed on the portion of the input image included in the first grid cell with a result of the inferencing operation performed on the portion of the input image included in the second grid cell and output one of the results based at least in part on the comparison.

In some implementations, the outputting of one of the results may include detecting one or more redundancies based on comparing the result of the inferencing operation performed on the portion of the input image included in the first grid cell with the result of the inferencing operation performed on the portion of the input image included in the second grid cell, where the one or more redundancies represent inferences associated with the result of the inferencing operation performed on the portion of the input image included in the first grid cell, and filtering the one or more redundancies from the output.

In some other implementations, the outputting of one of the results may include identifying one or more duplicate detections based on comparing the result of the inferencing operation performed on the portion of the input image included in the first grid cell with the result of the inferencing operation performed on the portion of the input image included in the second grid cell, where the one or more duplicate detections represent inferences associated with the result of the inferencing operation performed on the portion of the input image included in the first grid cell that overlap inferences associated with the result of the inferencing operation performed on the portion of the input image included in the second grid cell, and filtering the one or more duplicate detections from the output.

In some aspects, the computer vision system may further refrain from performing the inferencing operation on the portion of the input image included in a third grid cell of the plurality of grid cells based on the priority value assigned to the third grid cell and increment the priority value assigned to the third grid cell.

In some aspects, the computer vision system may further receive a second image following the input image; and remap the plurality of grid cells to the second image so that each grid cell of the plurality of grid cells includes a respective portion of the second image. In some implementations, the computer vision system may further perform the inferencing operation on the portion of the second image included in the first grid cell based on the updated priority value assigned to the first grid cell. In some other implementations, the computer vision system may further perform the inferencing operation on the portion of the second image included in a third grid cell of the plurality of grid cells based on the priority value assigned to the third grid cell.

In some aspects, the computer vision system may further compare the result of the inferencing operation performed on the portion of the input image included in the first grid cell with a result of the inferencing operation performed on the portion of the second image included in the third grid cell and selectively output each of the results based at least in part on the comparison.

In some aspects, the selective outputting of each of the results may include identifying one or more new additions based on comparing the result of the inferencing operation performed on the portion of the input image included in the first grid cell with the result of the inferencing operation performed on the portion of the second image included in the third grid cell; adding the one or more new additions to an addition queue; and adding the one or more new additions to the output after a threshold number of iterations of the inferencing operation are completed. In some implementations, the one or more new additions may represent inferences associated with the result of the inferencing operation performed on the portion of the second image included in the third grid cell that do not overlap any inferences associated with the result of the inferencing operation performed on the portion of the input image included in the first grid cell.

In some other aspects, the selective outputting of each of the results may include identifying one or more new deletions based on comparing the result of the inferencing operation performed on the portion of the input image included in the first grid cell with the result of the inferencing operation performed on the portion of the second image included in the third grid cell; adding the one or more new deletions to a deletion queue; and removing the one or more new deletions from the output after a threshold number of iterations of the inferencing operation are completed. In some implementations, the one or more new deletions may represent inferences associated with the result of the inferencing operation performed on the portion of the input image included in the first grid cell that do not overlap any inferences associated with the result of the inferencing operation performed on the portion of the second image included in the third grid cell.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the disclosure.

The methods, sequences or algorithms described in connection with the aspects disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor.

In the foregoing specification, embodiments have been described with reference to specific examples thereof. It will, however, be evident that various modifications and changes may be made thereto without departing from the broader scope of the disclosure as set forth in the appended claims. The specification and drawings are, accordingly, to be regarded in an illustrative sense rather than a restrictive sense.

**Claims**

1.  A method of inferencing performed by a computer vision system, comprising:

    receiving an input image;
    mapping a plurality of grid cells to the input image so that each grid cell of the plurality of grid cells includes a respective portion of the input image;
    performing an inferencing operation on the portion of the input image included in a first grid cell of the plurality of grid cells, the inferencing operation being associated with an object detection model; and
    performing the inferencing operation on a second grid cell of the plurality of grid cells based at least in part on a result of the inferencing operation performed on the portion of the input image included in the first grid cell.

2.  The method of claim 1, further comprising:

    assigning a respective priority value to each of the plurality of grid cells, the inferencing operation being performed on the portion of the input image included in the first grid cell based on the priority value assigned to the first grid cell; and
    updating the priority value assigned to the first grid cell based on the result of the inferencing operation performed on the portion of the input image included in the first grid cell.

3.  The method of claim 2, wherein the result of the inferencing operation indicates whether an object of interest is detected in the portion of the input image included in the first grid cell;
    wherein, optionally, the priority value assigned to the first grid cell is updated to a first value if the result of the inferencing operation indicates that no objects of interest are detected and is updated to a second value if the result of the inferencing operation indicates that an object of interest is detected in the portion of the input image included in the first grid cell, the first value being lower than the second value.

4.  The method of claim 2, further comprising:
    updating the priority value assigned to the second grid cell based on the result of the inferencing operation performed on the portion of the input image included in the first grid cell.

5.  The method of claim 4, wherein the result of the inferencing operation performed on the portion of the input image included in the first grid cell indicates that an object of interest is detected at an edge of the first grid cell overlapping the second grid cell; or
    the inferencing operation is performed on the portion of the input image included in the second grid cell based on the updated priority value assigned to the second grid cell.

6.  The method of claim 1, further comprising:

    comparing the result of the inferencing operation performed on the portion of the input image included in the first grid cell with a result of the inferencing operation performed on the portion of the input image included in the second grid cell; and
outputting one of the results based at least in part on the comparison.

7. The method of claim 6, wherein the outputting of one of the results comprises:

detecting one or more redundancies based on comparing the result of the inferencing operation performed on the portion of the input image included in the first grid cell with the result of the inferencing operation performed on the portion of the input image included in the second grid cell, the one or more redundancies representing inferences associated with the result of the inferencing operation performed on the portion of the input image included in the first grid cell; and
filtering the one or more redundancies from the output.

8. The method of claim 6, wherein the outputting of one of the results comprises:

identifying one or more duplicate detections based on comparing the result of the inferencing operation performed on the portion of the input image included in the first grid cell with the result of the inferencing operation performed on the portion of the input image included in the second grid cell, the one or more duplicate detections representing inferences associated with the result of the inferencing operation performed on the portion of the input image included in the first grid cell that overlap inferences associated with the result of the inferencing operation performed on the portion of the input image included in the second grid cell; and
filtering the one or more duplicate detections from the output.

9. The method of claim 2, further comprising:

refraining from performing the inferencing operation on the portion of the input image included in a third grid cell of the plurality of grid cells based on the priority value assigned to the third grid cell; and
incrementing the priority value assigned to the third grid cell.

10. An computer vision system, comprising:

a processing system; and
a memory storing instructions that, when executed by the processing system, causes the computer vision system to:

receive an input image;
map a plurality of grid cells to the input image so that each grid cell of the plurality of grid cells includes a respective portion of the input image;
perform an inferencing operation on the portion of the input image included in a first grid cell of the plurality of grid cells, the inferencing operation being associated with an object detection model; and
perform the inferencing operation on a second grid cell of the plurality of grid cells based at least in part on a result of the inferencing operation performed on the portion of the input image included in the first grid cell.

11. The computer vision system of claim 10, wherein execution of the instructions further causes the computer vision system to:

assign a respective priority value to each of the plurality of grid cells, the inferencing operation being performed on the portion of the input image included in the first grid cell based on the priority value assigned to the first grid cell; and
update the priority value assigned to the first grid cell based on the result of the inferencing operation performed on the portion of the input image included in the first grid cell.

12. The computer vision system of claim 11, wherein the result of the inferencing operation indicates whether an object of interest is detected in the portion of the input image included in the first grid cell, the priority value assigned to the first grid cell being updated to a first value if the result of the inferencing operation indicates that no objects of interest are detected and updated to a second value if the result of the inferencing operation indicates that an object of interest is detected in the portion of the input image included in the first grid cell, the first value being lower than the second value.

13. The computer vision system of claim 11, wherein execution of the instructions further causes the computer vision system to:
update the priority value assigned to the second grid cell based on the result of the inferencing operation performed on the portion of the input image included in the first grid cell.

14. The computer vision system of claim 13, wherein the result of the inferencing operation performed on the portion of the input image included in the first grid cell indicates that an object of interest is detected at an edge of the first grid cell overlapping the second grid cell; or
the inferencing operation is performed on the portion of the input image included in the second grid cell based on the updated priority value assigned to the second grid cell.

15. The computer vision system of claim 10, wherein execution of the instructions further causes the computer vision system to:

compare the result of the inferencing operation performed on the portion of the input image included in the first grid cell with a result of the inferencing operation performed on the portion of the input image included in the second grid cell; and
output one of the results based at least in part on the comparison.

16. The computer vision system of claim 15, wherein the outputting of one of the results comprises:

detecting one or more redundancies based on comparing the result of the inferencing operation performed on the portion of the input image included in the first grid cell with the result of the inferencing operation performed on the portion of the input image included in the second grid cell, the one or more redundancies representing inferences associated with the result of the inferencing operation performed on the portion of the input image included in the first grid cell; and
filtering the one or more redundancies from the output.

17. The computer vision system of claim 15, wherein the outputting of one of the results comprises:

identifying one or more duplicate detections based on comparing the result of the inferencing operation performed on the portion of the input image included in the first grid cell with the result of the inferencing operation performed on the portion of the input image included in the second grid cell, the one or more duplicate detections representing inferences associated with the result of the inferencing operation performed on the portion of the input image included in the first grid cell that overlap inferences associated with the result of the inferencing operation performed on the portion of the input image included in the second grid cell; and
filtering the one or more duplicate detections from the output.

FIG. 1

EP 4 414 944 A1

FIG. 2

EP 4 414 944 A1

FIG. 3

400

Select Grid Index (i)
402

priority[i] > M?
404

No → Increment priority[i]
406

Yes

Output cell[i] to Object Detection Component
408

FIG. 4A

410

Receive Inference from Object
Detection Component
412

↓

Reset priority[i]
414

↓

Objects Detected?
416 ──No──→ No Updates to
Priority Values
417

│Yes
↓

Update Priority Values Based on
Detections
418

FIG. 4B

500

```
┌─────────────────────────────┐
│  Increment Priority Values by │ ◄─────┐
│      Respective Weights       │       │
│            502                │       │
└─────────────────────────────┘       │
              │                         │
              ▼                         │
┌─────────────────────────────┐       │
│  Select Grid Index (i) Associated │   │
│   with Highest Priority Value │     │
│            504                │       │
└─────────────────────────────┘       │
              │                         │
              ▼                         │
┌─────────────────────────────┐       │
│ Output cell[i] to Object Detection │  │
│          Component            │───────┘
│            506                │
└─────────────────────────────┘
```

# FIG. 5A

510

Receive Inference from Object
Detection Component
512

Reset priority[i] and weight[i]
514

Objects Detected?
516

No → No Updates to
Weights
517

Yes

Update Weights Based on
Detections
518

FIG. 5B

Image 600

Cell 610

New Detection
601

Old Detection
602

FIG. 6

EP 4 414 944 A1

New
Inference
701 → Detection Buffer **710** → Combined Detections 702 → Cell-Center Purging **720** → Updated Detections 703 → Cell-Edge Purging **730** → Updated Detections 704 → Overlap Resolution **740** → Filtered Detections 705

700

# FIG. 7

FIG. 8A

FIG. 8B

EP 4 414 944 A1

FIG. 8C

EP 4 414 944 A1

FIG. 8D

Cell 910    Image 901    Image 902    Cell 920

912    912    922

FIG. 9

Image 1001    Cell 1010    Cell 1020    Image 1002

1011

FIG. 10

EP 4 414 944 A1

1100

Addition Queue
1130

Add Detections 1105

New Additions
1103

New Inference
1101

Detection
Comparison
1110

Filtered Detections 1102

Detection Buffer
1120

New Deletions
1104

Deletion Queue
1140

Remove Detections 1106

FIG. 11

FIG. 12

EP 4 414 944 A1

FIG. 13

Computer Vision System
1400

Image
Source
Interface
1410

Processing
System
1420

Memory 1430

Image Data Buffer 1431

Grid Mapping SW Module 1432

ROI Inferencing SW Module 1433

FIG. 14

1500

```
Receive an input image. (1510)
```

↓

```
Map a plurality of grid cells to the input image so that each grid cell of
the plurality of grid cells includes a respective portion of the input
image. (1520)
```

↓

```
Perform an inferencing operation on the portion of the input image
included in a first grid cell of the plurality of grid cells, the inferencing
operation being associated with an object detection model. (1530)
```

↓

```
Perform the inferencing operation on a second grid cell of the plurality
of grid cells based at least in part on a result of the inferencing
operation performed on the portion of the input image included in the
first grid cell. (1540)
```

# FIG. 15

Europäisches
Patentamt

European
Patent Office

Office européen
des brevets

# EUROPEAN SEARCH REPORT

Application Number

EP 24 15 6253

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LU YONGXI ET AL: "Adaptive Object Detection Using Adjacency and Zoom Prediction", 2016 IEEE CONFERENCE ON COMPUTER VISION AND PATTERN RECOGNITION (CVPR), IEEE, 27 June 2016 (2016-06-27), pages 2351-2359, XP033021414, DOI: 10.1109/CVPR.2016.258 [retrieved on 2016-12-09] * abstract * * figure 1 * * section 1 * * section 3.1 * * section 3.3.1 * | 1-17 | INV. G06V10/25 G06V10/70 G06V10/82 G06V10/80 G06V20/60 G06V40/10 |
| A | US 2019/035101 A1 (KWANT RICHARD [US] ET AL) 31 January 2019 (2019-01-31) * the whole document * | 1-17 | |

TECHNICAL FIELDS
SEARCHED (IPC)

G06V

The present search report has been drawn up for all claims

| Place of search | Date of completion of the search | Examiner |
|---|---|---|
| The Hague | 21 May 2024 | Martinez, Francis |

EPO FORM 1503 03.82 (P04C01)

## ANNEX TO THE EUROPEAN SEARCH REPORT
## ON EUROPEAN PATENT APPLICATION NO.

EP 24 15 6253

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2024

| Patent document cited in search report | Publication date | Patent family member(s) | Publication date |
|---|---|---|---|
| US 2019035101 A1 | 31-01-2019 | NONE | |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63483837